# EUROPEAN PATENT APPLICATION

(11) **EP 4 024 314 A1**
(43) Date of publication of application: **06.07.2022**
(21) Application number: 21215900.8
(22) Date of filing: 20.12.2021
(51) Int. Cl.: G06Q 30/02, G06Q 20/20

(54) **METHOD AND SYSTEM FOR REDUCING FOOD WASTE**

(30) Priority: 01.01.2021 SE 2130001
(71) Applicant: Deligate AB, 70360 Örebro (SE)
(72) Inventor: Vikström, Adam, 70360 Örebro (SE); Chahin, Mattias, 70212 Örebro (SE)
(74) Representative: Olsson, Carl Fredrik

(57) **Abstract**

The invention relates to a method to reduce overstock of products approaching best before date comprising the following method steps; i.) identify a product, ii.) identify the original price of the product, iii.) identify the expiration date of the product by that the expiration date is entered by a touch screen displaying date information, iv.) calculate, by a computer or other computing device, a price reduction for the product, v.) calculate, by a computer or other computing device, a new price by reducing the original price by the price reduction, vi.) produce an information label comprising a new product identifier and/or the new price.

The invention further relates to a system for product information and a software application product.

## Description

### TECHNICAL FIELD

The invention relates to a method of reducing food waste. The invention further relates to a system for product information.

### BACKGROUND OF THE INVENTION, PROBLEM AND PRIOR ART

A common and real day-to-day problem exists in supermarket and/or grocery stores with regards to handling products such as groceries approaching expiration date. The standard procedure utilized in the supermarket comprises that the staff frequently control the expirations date of the products and remove the product if the expiration date is passed or reduce the price of the product if there is a short time left before the expiration date is passed.

Patent document WO 2019/087159 A1 discloses a system and method to attribute expiration dates and quantities of a product to a bar code for pricing purposes. This method applies dynamic pricing to perishable food items.

Patent document WO 2019/087159 A1 does not disclose a system possible to integrate in a conventional grocery store since the products need to be pre marked with a bar code during production or at the supermarket and thus requesting additional manual work and thus additional cost.

Patent document JP 2009-146265A discloses a price reduction system where the date information is arranged on a barcode or wireless IC tag with the expiration date arranged to the tag and thus requesting additional manual work and thus additional cost.

Further problems addressed by the invention will become clear from the following detailed description of the various embodiments.

### OBJECT AND FEATURES OF THE INVENTION

The present invention relates to a method to reduce overstock of products approaching best before date comprising the following method steps; i.) identify a product, ii.) identify the original price of the product, iii.) identify the expiration date of the product by that the expiration date is entered by a touch screen displaying date information, iv.) calculate, by a computer or other computing device, a price reduction for the product, v.) calculate, by a computer or other computing device, a new price by reducing the original price by the price reduction, vi.) produce an information label comprising a new product identifier and/or the new price

According to further aspects of the improved method for reducing food waste, provision is made as follows;
that the product is identified by an SKU code.
that the expiration date is identified by image recognition.
that the information label is automatically arranged to the product.

The invention further relates to a system for product information comprising means for identifying products and means for displaying information about the identified product wherein the system is arranged with means for identifying the expiration date of the product and means for providing information comprising a new product identifier and means for calculating, by a computer or other computing device, a new price for the identified product based upon the identified expiration date and where the means for identifying the expiration date of the product is either a; - keyboard for entering a date, - touch screen, - camera for registering an image of the expiration date and means for recognizing the best before date on the image.

According to further aspects of the improved system for product information, provision is made as follows;
that the system further comprises that means for providing information is a label printer, where the label comprises a product identifier in the form of an SKU-code.
that the system further comprises that means for identifying products is a bar code reader.

The invention further relates to a software application product arranged to be activated and executed by a microprocessor arranged in a mobile terminal where the software application product comprises program/source code arranged to execute the method steps to reduce overstock of products approaching best before date comprising the method steps; i.) identify a product, ii.) identify the original price of the product, iii.) identify the expiration date of the product, iv.) calculate a price reduction for the product, v.) calculate a new price by reducing the original price by the price reduction, vi.) produce an information label comprising a new product identifier and/or the new price.

And where the product could be identified by an SKU code and/or that the expiration date is entered by a touch screen displaying date information and/or that the expiration date is identified by image recognition and/or that the information label is automatically arranged to the product.

### ADVANTAGES AND EFFECTS OF THE INVENTION

The disclosed method and system describe how to reduce overstock of products approaching best before date by letting the customers of the store to manually arrange a new price to a product approaching best before date by identifying the product by its product code such as an SKU-code and identifying the expiration date of the product. A price reduction and/or a new price is calculated and an information holder such as a label, such as an SKU-code label or price tag, is produced and arranged to the product.

Advantages of the invention includes less time spent by the staff of the store handling products approaching best before date. Less food waste and thus better usage of resources. Less volume of waste and thus less cost and time used by the store to dispose garbage. Increased awareness of the consumer to utilize products with short expiration date. Reduced number of products on display in the store with short remaining best-before date or even passed best-before date and thus a better customer experience with regards to the perceived freshness of the food.

### BRIEF DESCRIPTION OF FIGURES

Different embodiments of the invention are described in more detail below with reference to the attached figures, in which:
Fig. 1 shows method steps for method of reducing overstock of products approaching best before date according to an embodiment of the invention.
Fig. 2 shows a block diagram of the components of a product information terminal according to an embodiment of the invention.
Fig. 3 shows a product information terminal according to an embodiment of the invention.

### DETAILED DESCRIPTION OF EMBODIMENTS

An expiration date or expiry date is a previously determined date after which something should no longer be used and/or displayed for sale, either by operation of law or by exceeding the anticipated shelf life for perishable goods. Expiration dates are applied to selected food products and to some other manufactured products like infant car seats where the age of the product may impact its safe use.

Arbitrary expiration dates are also commonly applied by companies to product coupons, promotional offers and credit cards. In these contexts, the expiration date is chosen for business reasons or to provide some security function rather than any product safety concern. Expiration date is often abbreviated EXP or ED. The legal definition and usage of the term expiration date will vary between countries and products.

Best before or best by dates, appears on a wide range of fresh, frozen, dried, tinned and other foods, pet foods, tooth paste and cosmetic products. These dates are only advisory and refer to the quality of the product, in contrast with use by dates, which indicate that the product may no longer be safe to consume after the specified date. Food kept after the best before date will not necessarily be harmful, but may begin to lose its optimum flavor, visual appearance and/or texture. Expiration date, expiry date, best before and/or best by dates are used interchangeably in the text.

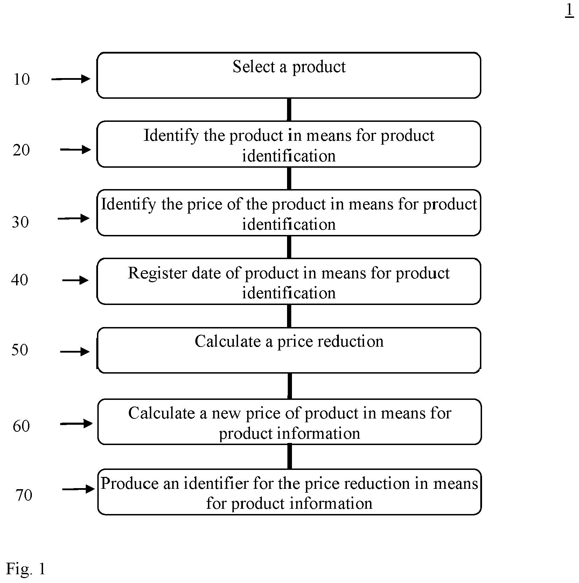

Fig. 1 shows the method steps for a method of reducing overstock of products approaching best before date. A consumer selects a product from the shelf in the store such as a supermarket. If the best-before date of the products is close from the actual date the customer could expect that a reduction of price is possible or/and even expected. The number of days vary between different food products, but for example for a dairy product a reduction in price could be expected 2 - 3 days before the expiry date. The customer brings the product to a product information terminal to investigate if a price reduction is possible. In a conventional store, with no product information terminal, the aware customer, when noticing a short time until the best-before date is passed, will exchange the product to a product with a longer time until the best-before date is passed with the result that the products with short time until the best-before date is passed will remain in the store and thus needs to be manually removed by the staff of the store and potentially is discarded or manually re-marked with a new price.

After the customer selected a product, shown as Select a product 10 in fig. 1, the customer identifies a product information terminal in the store and brings the product to the product information terminal. In the product information terminal, the customer registers the product, as shown in the method step Identify the product in means for product identification 20 in fig. 1. The product information terminal is a means for product identification as described in one embodiment of the invention. The product information terminal is connected to the ERP-system of the store. An enterprise resource planning system, the ERP-system, is an integrated management system of main business processes, often in real time and mediated by software and technology. ERP-system is usually referred to as a category of business management software-typically a suite of integrated applications-that an organization can use to collect, store, manage, and interpret data from many business activities. ERP-systems provides an integrated and continuously updated view of core business processes using common databases maintained by a database management system. ERP-systems track information such as the number of products, cost of purchase, price to customer etc. The database of the ERP-system also contains identification information for a specific product such as a SKU-code identifier. SKU, or stock-keeping unit, is a scannable bar code, most often seen printed on product labels in a retail store. The label allows vendors to automatically track the movement of inventory and is used to register the price at the retail counter when checking out from the store. The SKU is composed of an alphanumeric combination of characters commonly represented as a bar code. The characters could be a code that identify the price, product details, and the manufacturer. Existing barcodes and/or SKU-codes usually carries no meta data beside product name and price, additional tagging is thus needed in many occurrences for the purpose of specific identification, for example, for discount, or waste tracking. This is the reason that commonly when such occurrences happened (i.e., when a price is reduced on a product), a supermarket employee needs to add additional tag or sticker carry more data and this is done manually.

After the product is identified the price of the product is identified as shown as the method step Identify the price of the product in means for product identification 30 in fig. 1. The price of the product is stored in a database if the ERP-system and is accessible by the product information terminal.

After the price is identified the best-before date is entered in the product information terminal, as shown as method step Register date of product in means for product identification 40 in fig. 1. The registration could be from a keyboard, a touch screen on the product information terminal, from a readable medium on the product disclosing best-before date, voice recognition and/or extracted information from an image of the product. The information could be extracted by OCR, Optical Character Recognition, or other type of image recognition.

### Image recognition

Pattern recognition is the automated recognition of patterns and regularities in data. As an example, an image sensor, such as a digital camera, could register images. The images could be registered as individual images or as a stream of images registered with a predetermined frequency. The images are preferably represented by digital data and the digital data could be utilized to identify information in the digital data, as an example by utilizing machine learning.

Machine learning algorithms build a mathematical model based on sample data, known as training data, in order to make predictions and/or decisions based upon the information provided in the training data. One specific example of machine learning is supervised learning. Supervised learning algorithms build a mathematical model of a set of data that contains both the inputs and the desired outputs. The data is known as training data and consists of a set of training examples. Each training example has one or more inputs and the desired output, also known as a supervisory signal. In the mathematical model, each training example is represented by an array or vector, sometimes called a feature vector, and the training data is represented by a matrix. Through iterative optimization of an objective function, supervised learning algorithms learn a function that can be used to predict the output associated with new inputs. An optimal function will allow the algorithm to correctly determine the output for inputs that were not a part of the training data. An algorithm that improves the accuracy of its outputs or predictions over time is said to have learned to perform that task.

Types of supervised learning algorithms include Neural Networks, Support Vector Machines, classification and regression. Classification algorithms are used when the outputs are restricted to a limited set of values, and regression algorithms are used when the outputs may have any numerical value within a range.

After the expiration date is identified by the product information terminal a price reduction could be calculated by the product information terminal, as shown in step Calculate a price reduction 50 in fig. 1. The calculation of the price reduction could include the type of product, the time remaining until the best-before date is passed, information about how many items of the specific product that is available in the store, information about planned forthcoming delivery of new products and other information useful for determining a price reduction. As an example of other information could, for example, be that the store is intended to be closed the following day and the price is thus reduces accordingly to reduce the current stock of products in the store to limit the number of products with a passed best before date when the store opens after closure.

After a price reduction is calculated a new price of the product could be calculated by the product information terminal, as shown in the method step Calculate a new price of product in means for product information 60 in fig. 1. The new price is calculated by reducing the original price, i.e. the identified price of the product, by the price reduction.

After a new price is calculated a new label for the new price is produced, as shown in the method step Produce an identifier for the price reduction in means for product information 70 in fig. 1. The new identifier could be a label such as an SKU-code label, a price tag or other information identifier. In the case a use by date is passed or when the best before date is passed by a predetermined interval no new label is produced by the method of reducing overstock of products approaching best before date since the food is determined to be unsuitable for consumption. Instead a label indicating that the product should be discarded could be printed and/or information could be given on the display that the specific product should be placed in a specific location.

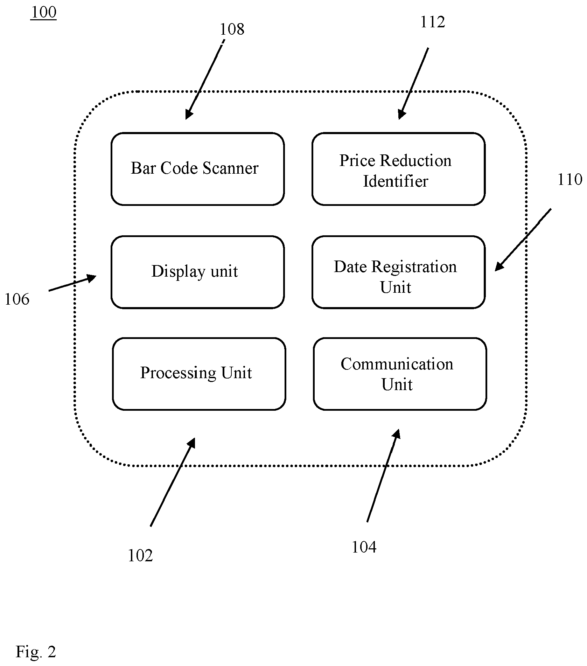

Fig. 2 shows block diagram of the components of a product information terminal 100. A processing unit 102 is the main controller of the product information terminal and is preferable a computer device arranged with a microprocessor or other processing unit. A Communication Unit 104 is arranged to the Processing Unit 102 to arrange for information exchange between the product information terminal and the ERP-system of the store or to a database and/or other information service such as a cloud computing or cloud-based service. The Communication Unit 104 is preferably a computer networking technology for LAN such as Ethernet or Wi-Fi. A Display Unit 106 is arranged to the product information terminal 100 to visually communicate with the user of the method of reducing overstock of products approaching best before date. The Display Unit 106 is in a first embodiment arranged with a touch screen to allow the user to input date information, or other information, to the product information terminal. A Bar Code Reader 108 is used to register product information into the product information terminal. The most common product information method used currently is an SKU-code represented as a scannable bar code. An alternative to the Bar Code Reader 108 is, for example, RFID reader or other radio-based system. A Date Registration Unit 110 is used to register date information from the product. An example the date registration unit is a touch screen arranged to the Display Unit 106 but could also be a keyboard to enter date information. An alternative embodiment of the Date Registration Unit 110 utilizes a camera, or other digital information registration device, to register an image of the product and specifically an image where the date information is present. In the alternative embodiment of the Date Registration Unit 110 the digital image information is used to automatically identify the date by image recognition such as optical character recognition. In a second alternative embodiment a combination of date registration in a conventional way, as an example by entering the date on a touch screen, and of a digital registration of the date information by an image registration of the date, to allow training of the product information terminal by the classification of an image for a specific date with the entered date information for the specific image and/date. The product information terminal thus produces training data for future use in image recognition algorithms of best before date. The product information terminal 100 could arrange a Price Reduction Identifier 112, such as a pricing tag comprising a SKU-code for a price reduction. The identifier could also be a code such as a QR-code or other visual code presented on a screen or printed, the identifier could also be a programmed to an RFID-tag. In one embodiment the Price Reduction Identifier 112 is a label printer arranged to print labels with SKU-code information.

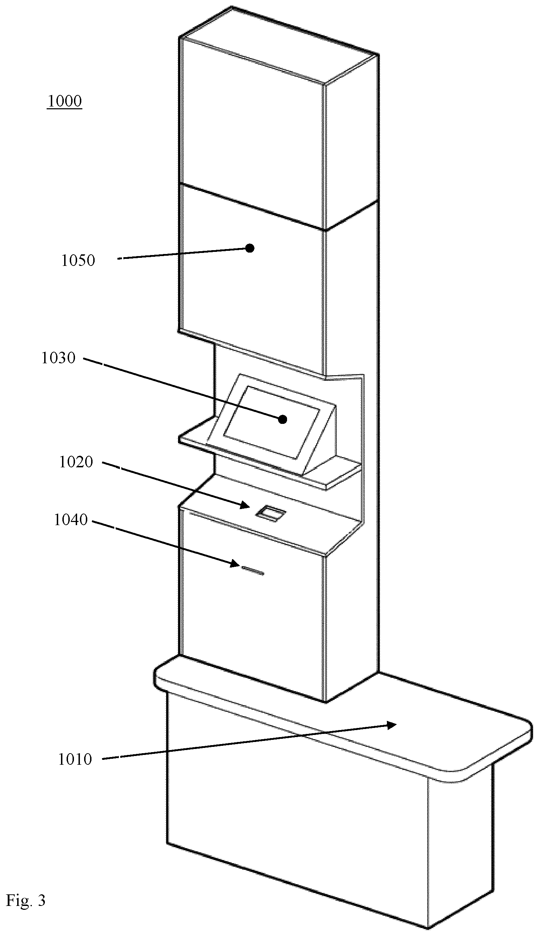

Figure 3 shows a representation of a product information terminal 1000 according to one embodiment of the invention. The product information terminal 1000 is preferably adapted to be arranged as a free-standing terminal for placement on the floor of a shop or supermarket. In an alternative embodiment the product information terminal 1000 could be integrated in other supermarket furnishing. In one embodiment the product information terminal 1000 is arranged with a shelf 1010 adapted for placement of products. A customer could arrange products or a shopping basket on the surface 1010. After the customer selects a product, as an example from the shopping basket placed on surface 1010, the product is arranged to be identified by a bar code scanner 1020, preferably so that the bar code is arranged towards the bar code scanner 1020. After the product is identified by the product information terminal 1000 product information is shown on the display 1030. Furthermore, a request could be present on the display 1030 to enter the best before date of the product. Preferably the display 1030 is arranged as a touch screen so that the customer could enter the date by pressing the correct date button shown on the display 1030. In an alternative embodiment a camera could be used to identify the best before date on the product and/or to register an image of the product. The image of the product could also be shown on display 1030 to make it clear to the customer that the product is registered and to potential avert the customer to not try to scan a product with short best-before date but use the label on another product. After the best before date is entered to the product information terminal a price reduction and a new price is calculated by a computer or other computing device arranged inside the product information terminal 1000. A new label could be printed by a label printer 1040 where the label could be arranged on the product, preferably over the current bar code to avoid that the previous, full price, bar code is scanned when the customer is checking out at the counter. The display could also display information to guide the customer to where the label should be placed on the product. In an alternative embodiment the label could be automatically arranged to the product. The product information terminal 1000 could also be arranged with a space for information 1050.

The system could also be used to print discount coupons, as an example for a specific campaign for a specific product, or for a specific brand, or for a specific type of food, such as beverages, candy etc. Specific discounts could also be arranged for a specific customer or customer group. By utilizing a campaign, the customer base could be introduced to the system.

In one embodiment the price reduction calculation for a product could be varied depending upon the type of products and depending upon how many days are left to the expiration date. For products with comparatively short shelf life, such as dairy products, to calculate price reduction of a product is dependent upon the days remaining to the expiration date so that; if it is three days left to expiration date the price is reduced with between 15 % to 30 % of the original price, if it is two days left to expiration date the price is reduced between 25 % to 40 % of the original price, if it is one day left to expiration date the price is reduced between 35 % to 50 % of the original price, if it is zero date left to expiration date the price is reduced between 45 % to 75 % of the original price.

The above is just an example and could be varied depending upon the product type, current storage level of products and other parameters.

### ALTERNATIVE EMBODIMENTS

The invention is not limited to the particular embodiments shown but can be varied in different ways within the scope of the patent claims.

In an alternative embodiment the method to reduce overstock of products approaching best before date described could be implemented in an application for use on a mobile device such as a smartphone. The product is identified by the camera of the smartphone that preferably reads the SKU-code of the product, the price of the product is identify by connecting the smartphone to the ERP-system, a price database or from information stored in the application. The expiration date of the product is identified by entering the date in the application on the smartphone or by image recognition of the date on the product by the camera of the smartphone. A price reduction is calculated for the product in the application and a new price is calculated by reducing the original price by the price reduction. An information label comprising a new product identifier and/or the new price is produced in the application and could be presented on the display of the smartphone or be arranged to be printed from a label printer arranged in connection to the smartphone or arranged in the store to be accessible by the smartphone.

## Claims

1. Method to reduce overstock of products approaching best before date comprising the following method steps;
i.) identify a product,
ii.) identify the original price of the product,
iii.) identify the expiration date of the product by that the expiration date is entered by a touch screen displaying date information,
iv.) calculate, by a computer or other computing device, a price reduction for the product,
v.) calculate, by a computer or other computing device, a new price by reducing the original price by the price reduction,
vi.) produce an information label comprising a new product identifier and/or the new price.

2. Method to reduce overstock of products approaching best before date according to claim 1 **characterized by** that the product is identified by an SKU code.

3. Method to reduce overstock of products approaching best before date according to any of claim 1 or 2 **characterized by** that the expiration date is identified by image recognition.

4. Method to reduce overstock of products approaching best before date according to any of the previous claims **characterized by** that the information label is automatically arranged to the product.

5. System for product information comprising means for identifying products and means for displaying information about the identified product **characterized by** that the system is arranged with means for identifying the expiration date of the product and means for providing information comprising a new product identifier and means for calculating, by a computer or other computing device, a new price for the identified product based upon the identified expiration date and where the means for identifying the expiration date of the product is either a;
- keyboard for entering a date,
- touch screen,
- camera for registering an image of the expiration date and means for recognizing the best before date on the image.

6. System for product information according to claim 5 **characterized by** that the system further comprises that means for providing information is a label printer, where the label comprises a product identifier in the form of an SKU-code.

7. System for product information according to any of claim 5 - 6 **characterized by** that the system further comprises that means for identifying products is a bar code reader.

8. Software application product arranged to be activated and executed by a microprocessor arranged in a mobile terminal where the software application product comprises program code arranged to execute the method steps according to any of claims 1 - 4.
